# EUROPEAN PATENT SPECIFICATION

(11) **EP 1 592 328 B1**
(45) Date of publication and mention of the grant of the patent: **13.09.2006**
(21) Application number: 04706108.0
(22) Date of filing: 29.01.2004
(51) Int. Cl.: A47G 27/02, A47G 27/04

(54) **FLOOR COVERING HAVING A REMOVABLE DECORATIVE INLAY**
FUSSBODENBELAG MIT EINER ENTFERNBAREN ZIEREINLAGE
REVETEMENT DE SOL COMPORTANT UN ELEMENT DECORATIF AMOVIBLE

(30) Priority: 30.01.2003 US 443578 P
(43) Date of publication of application: 09.11.2005
(73) Proprietor: Pacione, Joseph Rocco, New Market, Ontario L3Y 4V9 (CA); TAC-FAST SYSTEMS S.A., CH-1752 Villars-sur-Glâne 2 (CH)
(72) Inventor: Pacione, Joseph Rocco, New Market, Ontario L3Y 4V9 (CA); TAC-FAST SYSTEMS S.A., CH-1752 Villars-sur-Glâne 2 (CH)
(74) Representative: Vossius & Partner
(86) International application number: PCT/CA2004/000123
(87) International publication number: WO 2004/066793

(56) References cited:
- WO-A-00/74544
- FR-A- 2 582 210
- US-B1- 6 298 624

## Description

### Field of the invention

This invention relates to a covering for a floor, in which the covering has a removable decorative inlay. The decorative inlay has a looped underside for attachment to a field of hooks. The inlay itself is composed of a plurality of decorative pieces which are attached to a carrier sheet which is itself secured by a hook and loop attachment system to an underlying anchor sheet or other floor containing a field of hooks. The decorative pieces may be attached to the carrier sheet by a hook and loop attachment system.

### Background of the invention

Over the past several years, attempts have been made at incorporating hook and loop (Velcro (TM)) technology into floor coverings, particularly carpeting. There are several advantages to the use of such technology. It is environmentally friendly, permitting connection of flooring components *in situ* without the use of glues that release volatile organics. Hook and loop technology provides a robust connection, but one that is at the same time releasable, presenting advantages during installation and permitting replacement of damaged pieces, etc.

An example of the use of hook and loop technology in the field of carpets is described in United States Patent No. 4,822,658, which issued to Pacione on April 14, 1989. The specification of this patent shows a carpet having loops across its underside for attachment along its edges by means of hooked strips secured to a floor to be covered by the carpet.

Hook and loop attachment systems, in respect of flooring, provide an opportunity for creation of carpet units from multiple pieces to create interesting designs.

More recently, use of anchor sheets to cover, more or less, an entire area to be carpeted has been described in United States Patent No. 6,306,477, which issued to Pacione on October 23, 2001. Such an anchor sheet is described in a more detailed way in international patent application No. PCT/CA 00/00681, that was published under WO 00/74544 on December 14, 2000, and names Pacione as the inventor. Each of these cases describes a final carpet construction in which multiple carpet pieces are attached across the surface of an underlayment made up of multiple anchor sheets. The present invention relates to this sort of arrangement.

### Summary of the invention

The present invention in one aspect, is a floor covering containing a removable decorative inlay. The decorative inlay is attached to a field of hooks which substantially covers a floor to receive the decorative inlay. The decorative inlay is formed from a carrier sheet, comprising a bottom side substantially covered in loops, the carrier sheet is detachably attached by its loops to the field of hooks. Attached to the carrier sheet, is a first set of at least five decorative pieces which comprises a visually distinct design that substantially entirely fills the upper surface of the carrier sheet. There is a second set of decorative pieces having a bottom side substantially covered in loops detachably attached to the field of hooks to fill the space around the set of decorative pieces.

In one preferred embodiment, the first set of decorative pieces are carpet pieces, and the second set of decorative pieces are also carpet pieces. The first set in additional aspects of the invention, usually comprises groupings of carpet pieces, often in intricate patterns, to create coats of arms, pictures, ornamental medallions, and any other intricate and complicated form of design.

In this way, in the preferred embodiment, the invention is ideally suited for complicated designs which can be pre-installed on a carrier sheet in a factory or other location, transported to a site to be installed as a design element into a field of hooks at a flooring site.

In other aspects of the invention, the design could be carpet, ceramic, stone, metal, or wood, which can be installed onto the carrier sheet using a hook and loop attachment system or permanently installed on the carrier sheet so that such a design can be inset into a larger field of carpet or other material that has been installed on the field of hooks.

In another aspect of the invention, the decorative pieces (for instance carpet) installed on the carrier sheet, can be of the same height of the decorative pieces in the surrounding "fill" and are installed directly onto the field of hooks. In this way, the decorative inlay will be very slightly raised above the surface of the surrounding carpet materials. In another aspect of the invention, the inlay can be of a thinner or thicker material than the surrounding "fill", thereby creating other design possibilities.

### Brief description of the drawings

Particular embodiments of the invention are described below with reference to the accompanying drawings, in which:
Figure 1 shows a prior art floor tile that includes multiple carpet pieces attached to a carrier sheet;
Figure 2 shows an installation of a decorative inlay of the present invention attached to a field of hooks created by an anchor sheet subfloor;
Figure 3 shows an installation in which the decorative inlay of Figure 2 has carpet pieces as surrounding "fill" attached to the field of hooks created by a number of anchor sheets;
Figure 4 shows a cross-section of the installation of Figure 3 taken along line 4-4 of Figure 3;

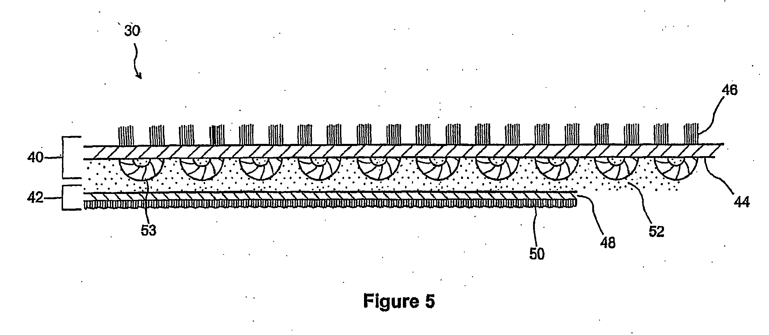

Figure 5 is a sectional type view of a preferred carpet construction for use with the present invention;
Figure 6 is a sectional type view of a preferred carrier sheet for use with the present invention;
Figure 7 is a sectional type view of a preferred anchor sheet for use with a carrier sheet.

### Detailed description of the invention

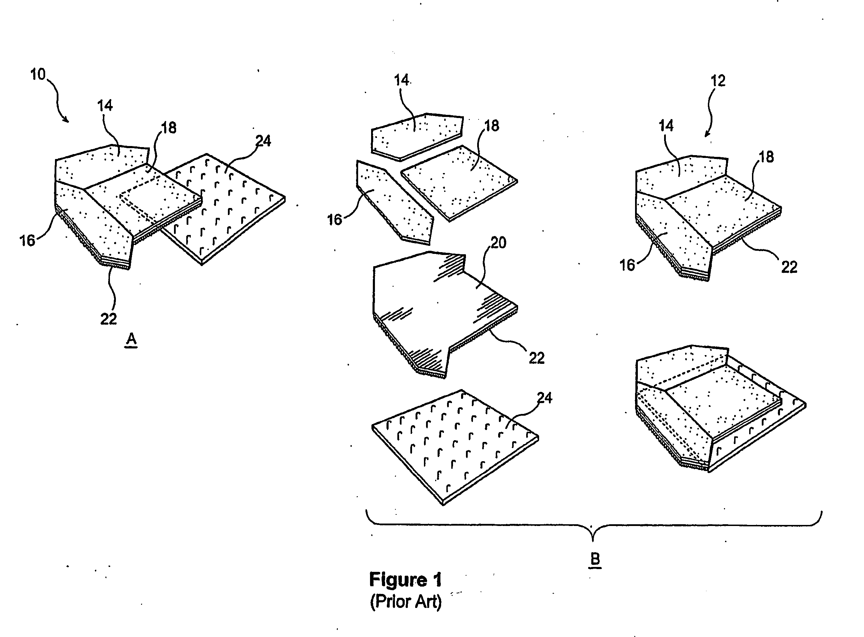

Turning to the drawings, Figure 1 shows prior art carpet tiles 10,12. This drawing is based on Figure 29 contained in the specification of United States Patent No. 6,298,624, which issued on October 9, 2001 to the inventor named herein, incorporated herein by reference. Each tile includes multiple carpet pieces 14, 16, 18 which are assembled onto carrier sheet **20,** having loops **22** on its underside, to create a unit for installation onto piece **24.** This creates a module as shown in Figure 1B, that can be used and installed in an overlapping fashion with other modules as shown in the '624 Patent.

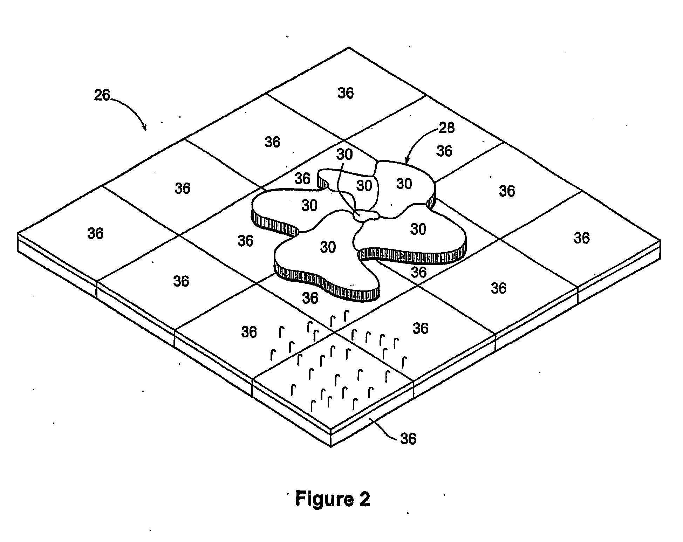

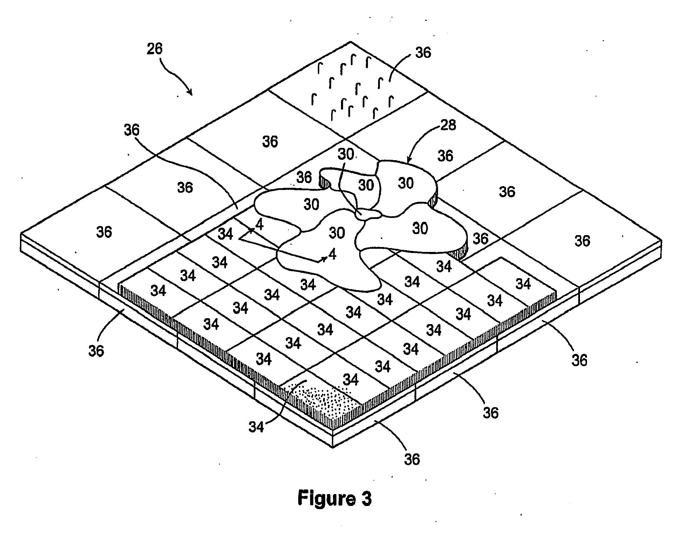

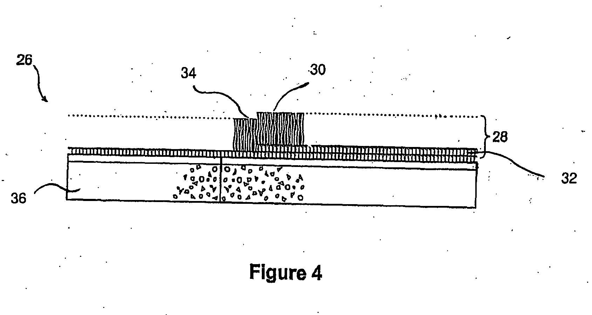

One aspect of the present invention is shown in Figures 2, 3, and 4. In this case, a carpet installation, **26** is shown. It includes a decorative inlay **28** in one preferred embodiment carpet installation. The inlay is made up of carpet pieces **30** attached to carrier sheet **32.** The decorative inlay **28** is formed from carpet pieces **30** and carrier sheet **32** is attached to the field of hooks created by anchor sheets **36.** Carrier sheet **32** is relatively thin in relation to the thickness of carpet pieces **30** and **34** and cannot readably be seen in Figures 2 and 3, but can be seen in Figure 4. Carpet pieces **34** provide the "fill" or background to the decorative inlay **28** and are installed directly onto the hooks of the anchor sheet.

Carpet pieces **30** and **34** can be made as the same construction as each other, or of a different construction from each other. If the carpet pieces are made of the same size and weight, then the decoration can appear to be an integral part of the overall carpet. Because carrier sheet **32** is of a relatively low profile in relation to the thickness of the carpet, the decorative inlay **28** will only be very slightly raised above the surrounding "field". This slight raising of decorative inlay 28 can help to offset the design and can be visually attractive. The height will not be sufficient to create an impediment to walking.

Alternatively, carpet pieces **30** and **34** can be made different heights, so that the decorative piece is at the same height as the "field" created by carpet pieces **34,** or is sunken in relation to carpet pieces **34.**

Further alternatively, the decorative pieces **30** can be made of any other material, preferred for the matter, such as stone, ceramic, marble, or even metal. In a preferred form, the decorative pieces are provided with a loop backing and the carrier sheet has a top side covered in hooks.

Further alternatively, the decorative pieces can be permanently attached to the carrier sheet. Since the carrier sheet will have loops on the back for detachable attachment to the underlying field of hooks, the permanent attachment of pieces **30** to the carrier sheet **32** is not of concern, as presumably the decorative inlay operates as a stand alone separate unit that can be moved, transported and reinserted in another background or field as desired.

In one preferred embodiment, the carpet is constructed in accordance with the carpet construction shown in the above-detailed application entitled "Carpet Tile, Installation, and Methods of Manufacture." Typically, such carpet is a laminate made up of an upper first layer **40** and a lower second layer **42.** The first layer **40** of the carpet includes a nonwoven primary backing **44** into which is needle pile yam **46.** Second layer **42** includes secondary backing **48** to which are attached lower loops **50.** The layers are secured to each other by hot melt adhesive **52.**

Again, typically the primary backing **44** is a nonwoven fabric. Pile yarn **46** is tufted into primary backing **44.**

One preferred secondary layer **42** is a tricot knit, supplied by Guilford Mills, Inc. of Greensboro, North Carolina. Typically, such a tricot knit forms a dense substrate which provides for loops **50** on the underside of the secondary backing **48,** which tricot precludes most, if not all, bleeding of hot melt **52** into the loops. Excessive bleeding, of course, is to be avoided as this could interfere with the function of the loops as fasteners.

First and second layers **40, 42** are attached to each other by hot melt layer **52** which also encapsulates tufts **53.** One particular adhesive used is an ethylene-vinyl acetate-based adhesive known as XP-025 provided by Barrier-Bac, Inc. of Calhoun, Georgia. The adhesive is substantially free of filler, organic and inorganic. The overall weight of the carpet of the present invention is approximately 80-100 oz per square yard. It will thus be appreciated that it is possible, according to the invention, to have a carpet, and carpet tile, with a relatively lightweight secondary backing. Such a backing lacks a stabilizing layer and, as is explained below, is relatively free of filler. Such a carpet or carpet tile has little or no inherent dimensional stability of its own in relation to externally applied physical forces, such as stretching forces, forces exerted in use by rolling machinery, furniture movement, etc.

The carpet laminate can eventually be cut into tiles at some convenient point. This enables a decorative inlay to be created from numerous carpet pieces. Such pieces installed on a carrier sheet in a factory or other location, can have a complicated pattern, but, as they exist as a self-contained unit on the carrier sheet, can be transported to a site, and installed separately. They can also be removed when a change is desired.

With the carpet described above, combined with a field of hooks, it is possible to make a carpet tile of any shape and size to order. Even small carpet tiles, i.e. 2" x 2" can be easily incorporated into carpet installation. The carpet laminate can be cut through the back or the front by, for example, an ultrasonic cutting cutter on a plotting table. The cutter can be controlled by software to make any form of pattern or design.

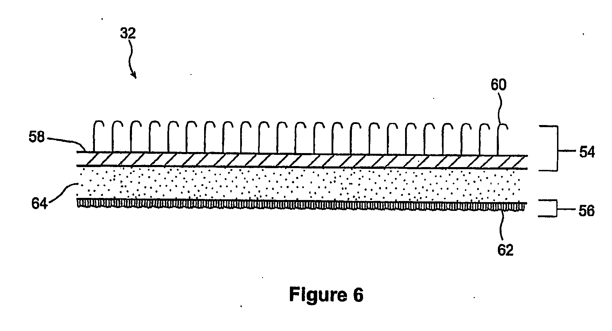

Carrier sheet **32** is illustrated separately in Figure 6. Carrier sheet includes upper layer **54** and lower layer **56.** Upper layer **54,** manufactured of polypropylene, includes base' sheet **58** and hooks **60** across the upper side of the sheet. The whole carrier sheet is designed to carry a number of individual pieces to form a decorative inlay. Generally speaking, it is desired to have the profile as thin as possible, so as not to raise the decorative inlay above the surrounding "field" or background, other than a small amount to perhaps create a slight visual effect without impairing the ability of a person or persons to walk over the decorative inlay, which would be desirable in most instances.

One particular carrier sheet of the invention includes two extruded sheets of polypropylene, which are secured together by a hot melt, typically EVA hot melt. The thickness of each two extruded sheets (not taking into account hooks and loops) is about 0.3 mm, and the bonding layer is about 0.1 mm. There are alternatives to these sheets commercially available. Lower layer **56** of the carrier sheet provides the carrier sheet with loops **62** across the underside of the sheet. Layer **56** has the same tricot construction of second layer **42** of carpet **36** described above. Layers **54** and **56** are secured to each other by EVA hot melt **64.**

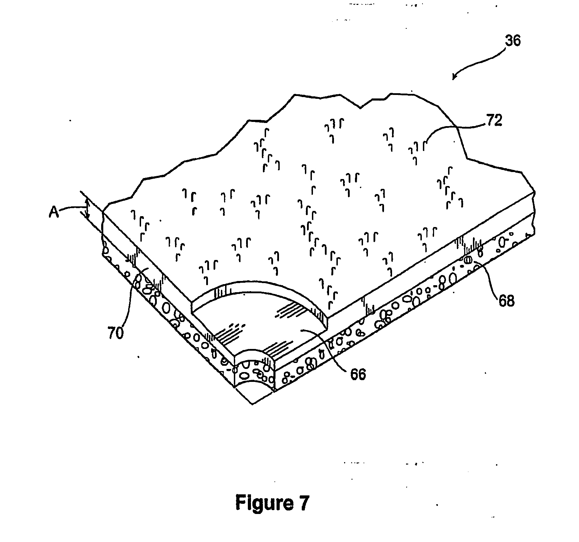

Anchor sheet **36** is illustrated separately in Figure 7. The preferred embodiment is manufactured in accordance with the description provided in the above-detailed applications entitled "System and methods of Manufacturing hook-plates" and "Improved anchor sheet". The thickness of anchor sheet A is about 1/8 inches, and the thickness of the anchor sheet at **66** is about 1/16inches. The corner of the anchor sheet includes a counter sunk area attachment, for attaching, if desired, to other anchor sheets, or to an underlying floor, as described in WO 0/74544 published December 14, 2000. The anchor sheet **36** includes a cushion **68** of thickness that can be either approximately 1/4 inches, or 3/8 inches depending on the desired resiliency and the amount of surface traffic. The hooks **72** of the top surface layer 70 will have a density that may range from 160-1200 hooks/square inch, with a preferred density of approximately 230 hooks/square inch.

The preferred material for the top surface layer **70** is polypropylene and the cushion **68** is polyethylene. In a preferred embodiment, the cushion **68** is made from linear load density polyethylene with a density of approximately 30kg/m³.

With the floor covering having a decorative inlay formed by an additional carrier sheet, complicated decorative inlays can be pre-made and installed into a surrounding field or background.

Such decorative inlays can be moved or replaced to change the look of a floor immediately and inserted and removed to provide personalized features, such as a family crest or favourite theme or topic. Decorative inlays can easily be sold as a unit for insertion into a surrounding field of hooks and can appeal to particular categories of consumers, children, sports fans, music lovers, or virtually any category where a specific design can be incorporated into a carpet or other decorative inlay as desired.
The invention disclosed in this preferred embodiment is just one aspect of the invention which is intended to be defined by the claims which follow.

## Claims

1. A floor covering containing a decorative pattern comprising:
(i) a field of hooks substantially covering a floor to receive decorative overlaid pieces;
(ii) a carrier sheet (32) comprising a top side substantially covered in hooks (being one half of a hook and loop attachment system) and a bottom side substantially covered in loops (being a second half of a hook and loop attachment system), the carrier sheet detachably attached by its loops to the field of hooks;
(iii) a first set of at least five decorative pieces (30) having a bottom side substantially covered in loops being one half of a hook and loop attachment system, the set of decorative pieces detachably attached to the upper surface of the carrier sheet and comprising a visually distinct design sheet substantially filling the upper surface of the carrier sheet, and
(iv) a second set of decorative pieces (34) having a bottom side substantially covered in loops (being one half of a hook and loop attachment system), detachably attached to the field of hooks to fill the space around the first set of decorative pieces.

2. The floor covering of claim 1 in which the carrier sheet is of a thickness substantially less than the thickness of the decorative pieces.

3. The floor covering of claim 2 in which the first and second set of decorative pieces are of the same thickness.

4. The floor covering of claim 3 in which the second set of decorative pieces is carpet.

5. The floor covering of claim 4 in which the first set of decorative pieces is carpet.

6. The floor covering of claim 5 in which the first set of decorative pieces is wood, ceramic, stone, or metal.

7. The floor covering of claim 2 in which the thickness of the first set of pieces is less than the second set of pieces by an amount which substantially equals the thickness of the carrier sheet.

8. The floor covering of claim 6 in which the first set of decorative pieces is carpet.

9. The floor covering of claim 7 in which the second set of decorative pieces is carpet, wood, ceramic, stone, or metal.

10. The floor covering of claim 8 in which the carrier sheet has a thickness of from 0.2 mm to 2 mm.

11. A method of creating a floor covering having decorative inlays comprising:
(i) laying a field of hooks on a floor;
(ii) assembling at least five decorative pieces (30) having a bottom side substantially covered in loops onto a hooked surface of a carrier sheet (32) having a top surface of hooks and a bottom surface of loops to create a design;
(iii) detachably attaching the carrier sheet unto a field of hooks;
(iv) attaching a plurality of pieces (34) having a bottom side substantially covered in loops onto the field of hooks surrounding the carrier sheet to create a field or background for the design on the carrier sheet.

12. A floor covering containing a decorative pattern comprising:
(i) a field of hooks substantially covering a floor to receive decorative overlaid pieces;
(ii) a carrier sheet (32) comprising a bottom side substantially covered in loops of a hook and loop attachment system, the carrier sheet detachably attached by its loops to the field of hooks;
(iii) a first set of at least five decorative pieces (30), the set of decorative pieces attached to the upper surface of the carrier sheet and comprising a visually distinct design sheet substantially filling the upper surface of the carrier sheet, and
(iv) a second set of decorative pieces (34) having a bottom side substantially covered in loops of the hook and loop attachment system, detachably attached to the field of hooks to fill the space around the first set of decorative pieces.

## Patentansprüche

1. Bodenbelag mit einem Dekormuster, mit:
(i) einem Hakenfeld, das einen Boden im wesentlichen bedeckt, zum Aufnehmen aufgelegter Dekorstücke;
(ii) einer Trägerlage (32) mit einer Oberseite, die im wesentlichen mit Haken bedeckt ist (die eine Hälfte eines Haken- und Schlaufen-Befestigungssystems darstellen), und einer Unterseite, die im wesentlichen mit Schlaufen bedeckt ist (die eine zweite Hälfte eines Haken- und Schlaufen-Befestigungssystems darstellen), wobei die Trägerlage durch ihre Schlaufen am Hakenfeld lösbar befestigt wird;
(iii) einem ersten Satz von mindestens fünf Dekorstücken (30) mit einer Unterseite, die im wesentlichen mit Schlaufen bedeckt ist, die eine Hälfte eines Haken- und Schlaufen-Befestigungssystems darstellen, wobei der Satz von Dekorstücken an der Oberseite der Trägerlage lösbar befestigt ist und eine optisch ausgeprägte Designschicht aufweist, die die Oberseite der Trägerlage im wesentlichen füllt; und
(iv) einem zweiten Satz von Dekorstücken (34) mit einer Unterseite, die im wesentlichen mit Schlaufen bedeckt ist (die eine Hälfte eines Haken- und Schlaufen-Befestigungssystems darstellen), und die am Hakenfeld lösbar befestigt werden, um den Raum um den ersten Satz von Dekorstücken zu füllen.

2. Bodenbelag nach Anspruch 1, wobei die Trägerlage eine Dicke hat, die wesentlich kleiner ist als die Dicke der Dekorstücke.

3. Bodenbelag nach Anspruch 2, wobei der erste und der zweite Satz von Dekorstücken die gleiche Dicke aufweisen.

4. Bodenbelag nach Anspruch 3, wobei der zweite Satz von Dekorstücken ein Teppichmaterial ist.

5. Bodenbelag nach Anspruch 4, wobei der erste Satz von Dekorstücken ein Teppichmaterial ist.

6. Bodenbelag nach Anspruch 5, wobei der erste Satz von Dekorstücken ein Holz-, Keramik-, Stein- oder Metallmaterial ist.

7. Bodenbelag nach Anspruch 2, wobei die Dicke des ersten Satzes von Dekorstücken um ein Maß kleiner ist als diejenige des zweiten Satzes von Dekorstücken, das der Dicke der Trägerlage im wesentlichen gleicht.

8. Bodenbelag nach Anspruch 6, wobei der erste Satz von Dekorstücken ein Teppichmaterial ist.

9. Bodenbelag nach Anspruch 7, wobei der zweite Satz von Dekorstücken ein Teppich-, Holz-, Keramik-, Stein- oder Metallmaterial ist.

10. Bodenbelag nach Anspruch 8, wobei die Trägerlage eine Dicke von 0,2 bis 2 mm hat.

11. Verfahren zum Herstellen eines Bodenbelags mit Dekoreinlagen, mit den Schritten:
(i) Verlegen eines Hakenfeldes auf einem Fußboden;
(ii) Zusammensetzen von mindestens fünf Dekorstükken (30), die eine Unterseite aufweisen, die im wesentlichen mit Schlaufen bedeckt ist, auf einer mit Haken versehenen Fläche einer Trägerlage (32), die eine Oberseite mit Haken und eine Unterseite mit Schlaufen aufweist, zum Erzeugen eines Designs;
(iii) lösbares Befestigen der Trägerlage auf einem Hakenfeld;
(iv) Befestigen mehrerer Dekorstücke (34) mit einer Unterseite, die im Wesentlichen mit Schlaufen bedeckt ist, auf einem Hakenfeld, das die Trägerlage umgibt, zum Erzeugen eines Feldes oder eines Hintergrundes für das Design auf der Trägerlage.

12. Bodenbelag mit einem Dekormuster, mit:
(i) einem einen Boden im wesentlichen bedeckenden Hakenfeld zum Aufnehmen aufgelegter Dekorstücke;
(ii) einer Trägerlage (32) mit einer Unterseite, die im wesentlichen mit Schlaufen eines Haken- und Schlaufen-Befestigungssystems bedeckt ist, wobei die Trägerlage durch ihre Schlaufen am Hakenfeld befestigt ist;
(iii) einem ersten Satz von mindestens fünf Dekorstücken (30), wobei der Satz von Dekorstücken an der Oberseite der Trägerlage befestigt ist und eine optisch ausgeprägte Designschicht aufweist, die die Oberseite der Trägerlage im wesentlichen füllt; und
(iv) einem zweiten Satz von Dekorstücken (34) mit einer Unterseite, die im Wesentlichen mit Schlaufen des Haken- und Schlaufen-Befestigungssystems bedeckt ist, die am Hakenfeld lösbar befestigt werden, um den Raum um den ersten Satz von Dekorstücken zu füllen.

## Revendications

1. Revêtement de sol contenant un motif décoratif comprenant :
(i) un champ de crochets recouvrant sensiblement un sol pour recevoir des empiècements revêtus décoratifs ;
(ii) une feuille de support (32) comprenant un côté de dessus sensiblement recouvert de crochets (constituant une moitié d'un système de fixation à boucles et crochets) et un côté de dessous sensiblement recouvert de boucles (constituant une deuxième moitié d'un système de fixation à boucles et crochets), la feuille de support étant attachée de manière détachable par ses boucles au champ de crochets ;
(iii) un premier ensemble d'au moins cinq empiècements décoratifs (30) ayant un côté de dessous sensiblement recouvert de boucles constituant une moitié d'un système de fixation à boucles et crochets, l'ensemble d'empiècements décoratifs étant attaché de manière détachable à la surface supérieure de la feuille de support et comprenant une feuille ayant un motif visuellement distinct remplissant sensiblement la surface supérieure de la feuille de support, et
(iv) un deuxième ensemble d'empiècements décoratifs (34) ayant un côté de dessous sensiblement recouvert de boucles (constituant une moitié d'un système de fixation à boucles et crochets), attaché de manière détachable au champ de crochets pour remplir l'espace autour du premier ensemble d'empiècements décoratifs.

2. Revêtement de sol selon la revendication 1, dans lequel la feuille de support a une épaisseur sensiblement inférieure à l'épaisseur des empiècements décoratifs.

3. Revêtement de sol selon la revendication 2, dans lequel les premier et deuxième ensembles d'empiècements décoratifs ont la même épaisseur.

4. Revêtement de sol selon la revendication 3, dans lequel le deuxième ensemble d'empiècements décoratifs est un tapis.

5. Revêtement de sol selon la revendication 4, dans lequel le premier ensemble d'empiècements décoratifs est un tapis.

6. Revêtement de sol selon la revendication 5, dans lequel le premier ensemble d'empiècements décoratifs est en bois, en céramique, en pierre, ou en métal.

7. Revêtement de sol selon la revendication 2, dans lequel l'épaisseur du premier ensemble d'empiècements est inférieure à celle du deuxième ensemble d'empiècements d'une quantité sensiblement égale à l'épaisseur de la feuille de support.

8. Revêtement de sol selon la revendication 6, dans laquelle le premier ensemble d'empiècements décoratifs est un tapis.

9. Revêtement de sol selon la revendication 7, dans lequel le deuxième ensemble d'empiècements décoratifs est un tapis ou est en bois, en céramique, en pierre, ou en métal.

10. Revêtement de sol selon la revendication 8, dans lequel la feuille de support a une épaisseur de 0,2 mm à 2 mm.

11. Procédé pour créer un revêtement de sol ayant des incrustations décoratives, comprenant :
(i) l'étalement d'un champ de crochets sur un sol ;
(ii) l'assemblage d'au moins cinq empiècements décoratifs (30) ayant un côté de dessous sensiblement recouvert de boucles sur une surface à crochets d'une feuille de support (32) ayant une surface de dessus en crochets et une surface de dessous en boucles pour créer un motif ;
(iii) l'attachement de manière détachable de la feuille de support sur un champ de crochets ;
(iv) l'attachement d'une pluralité d'empiècements (34) ayant un côté de dessous sensiblement recouvert de boucles sur le champ de crochets entourant la feuille de support pour créer un champ ou un fond pour le motif sur la feuille de support.

12. Revêtement de sol contenant un motif décoratif comprenant :
(i) un champ de crochets recouvrant sensiblement un sol pour recevoir des empiècements revêtus décoratifs ;
(ii) une feuille de support (32) comprenant un côté de dessous sensiblement recouvert de boucles d'un système de fixation à boucles et crochets, la feuille de support étant attachée de manière détachable par ses boucles au champ de crochets ;
(iii) un premier ensemble d'au moins cinq empiècements décoratifs (30), l'ensemble d'empiècements décoratifs étant attaché à la surface supérieure de la feuille de support et comprenant une feuille ayant un motif visuellement distinct remplissant sensiblement la surface supérieure de la feuille de support, et
(iv) un deuxième ensemble d'empiècements décoratifs (34) ayant un côté de dessous sensiblement recouvert de boucles du système de fixation à boucles et crochets, attaché de manière détachable au champ de crochets pour remplir l'espace autour du premier ensemble d'empiècements décoratifs.
